# EUROPEAN PATENT SPECIFICATION

(11) **EP 0 299 066 B1**
(45) Date of publication and mention of the grant of the patent: **20.07.1994**
(21) Application number: 87900685.6
(22) Date of filing: 12.01.1987
(51) Int. Cl.: B42D 15/00, G06K 1/12, G06K 19/06

(54) **FOUR-POINT CORRESPONDENCE TYPE INDIVIDUAL INFORMATION MARK SHEET**
BOGEN MIT INDIVIDUELLEN INFORMATIONSZEICHEN DER ART VON VIER MITEINANDER IN BEZUG STEHENDEN PUNKTEN
FEUILLE DE MARQUAGE D'INFORMATIONS INDIVIDUELLES DU TYPE A CORRESPONDANCE A QUATRE POINTS

(43) Date of publication of application: 18.01.1989
(73) Proprietor: TOMIOKA, Makoto, Chiba 272 (JP)
(72) Inventor: TOMIOKA, Makoto, Chiba 272 (JP)
(74) Representative: Robinson, John Stuart
(86) International application number: JP8700007
(87) International publication number: WO8804992

(56) References cited:
- FR-A- 1 115 882
- JP-A- 5 445 539
- JP-A- 5 824 853
- JP-A-57 168 381
- JP-A-57 191 788
- US-A- 4 286 146
- IBM TECHNICAL DISCLOSURE BULLETIN, vol. 3, no. 10, March 1961, pages 29-30, NewYork, US; H.H. NICK: "Two-dimensional code"
- JP-A 57-191788 & Patent Abstracts of Japan; Vol. 7 Number 42 (P-177)[1187]; page 21 P 177;
- US-A 3,898,434

## Description

The present invention relates to a shaded code system including a marked sheet, to a method of coding and reading such a sheet, and to a printed information sheet marked in accordance with the code.

Examples of codes can be found from Japanese Patent Publication No. 57-191788 by Takeo Tada and French Patent No. 1115882 by Decrulle. In the first reference, a shaded code is disclosed for enabling data entry to a computer to be simplified and quickened. In the second reference, a code using a perforated card is described for enabling a numerical value to be more quickly entered.

U.S. Patent No. 3898434 discloses an automatic coding system in which a machine prints a shaded code onto a sheet which can then be scanned by fiber optics through an apertured masking sheet. Each square unit of the code has four square regions which may be printed or not printed in accordance with a binary representation of a number. This disclosure corresponds to the pre-characterizing portion of Claim 1.

Conventional bar codes have also been used for printing a code onto various products. The code depends on the variation of widths of bars to provide the coded information. Accordingly very high accuracy of the widths of the written bars is required in the order of microns. Regardless of whether the bars are written manually or printed, this imposes many technical limitations, resulting in high cost.

The present invention seeks to provide a shaded code which may be accurately read by a sensor even in the presence of comparatively large errors in the manual writing of the code.

According to the present invention there is provided a shaded code system as defined in the appended claims 1 and 4. Preferred embodiments of the present invention are defined in other appended claims.

By way of example only, the preferred embodiment of the present invention will now be described with reference to the accompanying drawings, in which:
Figure 1 is a plan view of a unit being divided into four regions;
Figure 2 illustrates a plan view of 10 possible units of the code showing how the numerals are represented by four-point correspondence type individual information mark shaded regions;
Figure 3 is a schematic diagram of a unit showing the sides of a fourfold unit;
Figure 4 is an exploded perspective view of a mastersheet;
Figure 5 is a plan view of an information sheet on which the code has not yet been printed;
Figure 6 is a plan view of an information sheet having a code according to the preferred embodiment of the present invention; and
Figure 7 is a plan view of a unit and associated sites for printing the equivalent character.

The preferred embodiment of the present invention comprises a number of units 6 each of which is divided into four regions 1-4. Each region 1-4 is either completely shaded or remains blank. Each character of the code is represented by a particular combination of shaded regions 1-4. In this embodiment, each region 1-4 is shown as a square.

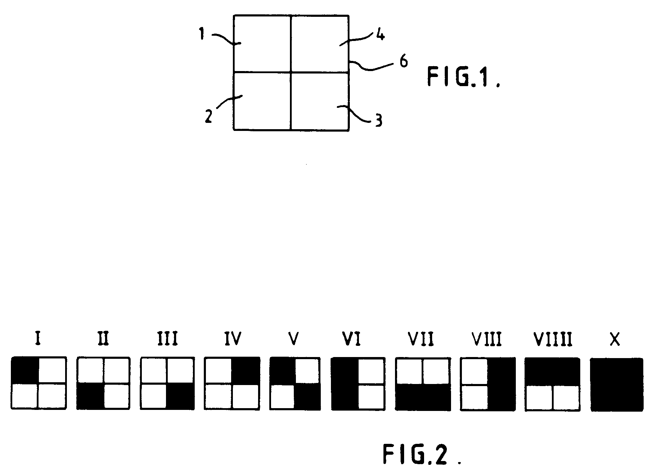

Referring to Figure 2, each of the unique units represents one of the characters one to ten. For example numeral five is represented by a unit 6 having regions 1 and 3 shaded or printed.

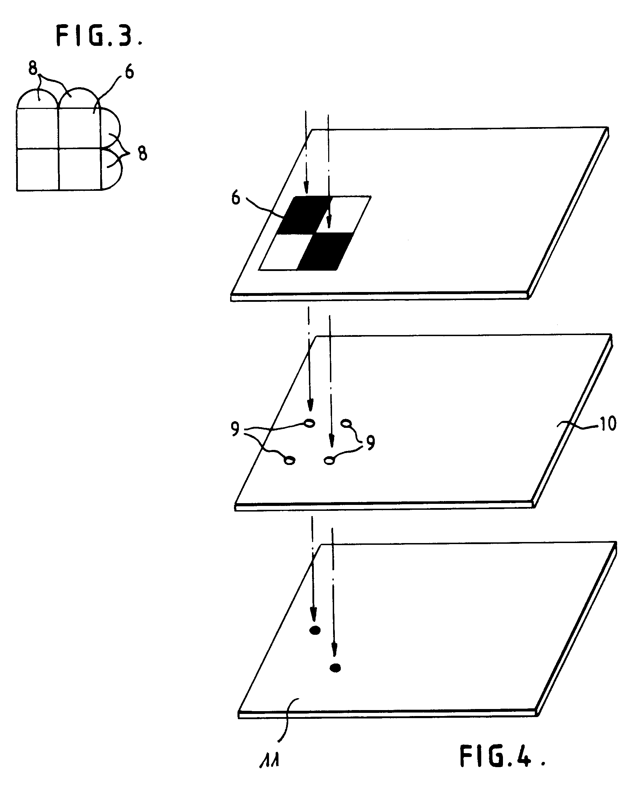

Figure 4 illustrates an information sheet having the information extracted therefrom. The masking sheet 10 is positioned between the mastersheet containing the code and a sensor sheet 11.

The present invention enables the shaded code to be manually written or printed, without making the regions 1-4 large, whilst enabling the code to be read accurately. If one side 8 of the unit 6 has a dimension of A millimetres and the diameter of the light passage holes 9 of the mastersheet 10 has a dimension of B millimetres (in this case A is greater than B), then an accurate reading is possible within an error margin of (A-B)/2 millimetres in the vertical or horizontal directions. Therefore even if there is an overflow of shading or printing, so long as the overflow does not affect the other regions 1-4, accurate reading of the code is possible.

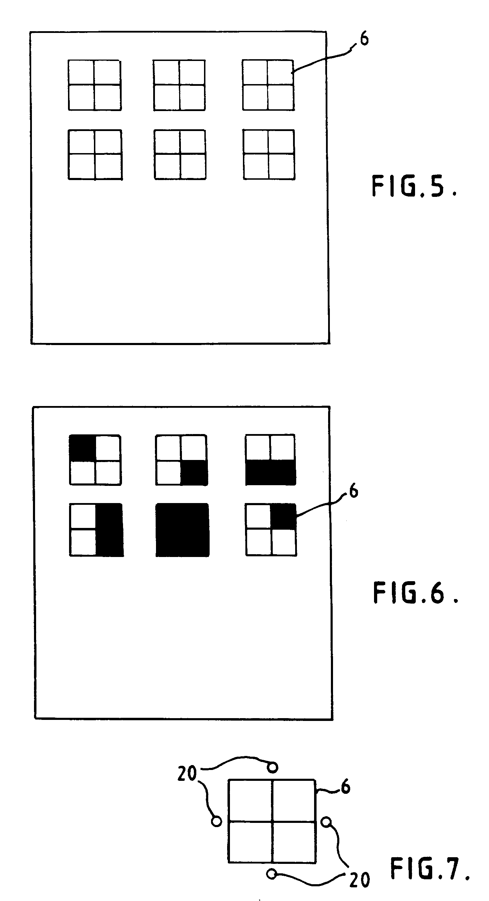

In some applications only a small quantity of information is required and so an information sheet as shown in Figure 5 may be simply marked with the required information and results in an information sheet having the manually marked code as shown in Figure 6.

Also, in cases where a large number of identical information sheets are required, a printing negative plate may be prepared on which the required quantity of information following the rules of Fig. 2 is arranged in the requisite sequence, sheets being used that are printed from this negative. In this case, in order to minimise information errors especially in proof reading, at the sites 20 indicated by a "O" in Fig. 7 the equivalent characters associated with the corresponding units 6 may be provided.

Accordingly the present invention enables the shaded code to be read in the same manner as bar codes but has a greater degree of flexibility for over-flow or errors in marking, so that the shaded code can be read more accurately, and simpler reading methods may be used. Additionally simpler printing techniques may also be used for preparing the information sheets which have hitherto been unavailable to preparation of bar codes.

The present invention has a number of applications which includes communications, massmedia publications, data processing, industrial and service applications, and electrical equipment and devices.

The foregoing description of the preferred embodiment of the present invention has been given by way of example only and it will be appreciated by persons skilled in the art that modifications may be made without departing from the scope of the claims.

## Claims

1. A shaded code system comprising: a sheet marked in accordance with a predetermined shading code having a plurality of characteristics, comprising at least one unit (6), each unit (6) being divided into four square regions (1, 2, 3, 4) having substantially similar dimensions, each characteristic of the code being represented by a respective unit (6) having a particular arrangement of shaded and blank regions; and means cooperating with the marked sheet for defining four discrete sensed regions of the plane of the sheet which are smaller (9) than the said square regions (1, 2, 3, 4) and which are capable of registering in one-to-one correspondence with respective square regions with correct relative positioning of the code, characterized in that the sheet is a manually marked sheet showing the unit (6) divided into its square regions (1,2,3,4) and in which the means for defining the discrete sensed regions comprises a masking sheet with four discrete regions (9) for defining the sensed regions whereby the masking sheet is interposed between the shaded code sheet and a sensor sheet.

2. A shaded code system as claimed in claim 1, characterised in that said plurality of characteristics comprise the decimal notation 0 to 9.

3. A method of coding and reading a shaded code using the marked sheet of the system of Claim 1 or 2 comprising manually marking the pre-printed marking sheet to represent characteristics as shaded units (6) and then using a sensor sheet to sense light from four discrete sensed regions of the plane of each code which are smaller (9) than the said square regions (1, 2, 3, 4) and which are placed in register in one-to-one correspondence with respective square regions, including positioning the code for accurate sensing of the code such that none of the sensed regions (9) comes into register with any part of any of the square regions (e.g. 2, 3, 4) adjacent to its unique square region (1).

4. A printed information sheet marked in accordance with a predetermined shading code having a plurality of characteristics, comprising at least one unit (6), each unit (6) being divided into four square regions (1, 2, 3, 4) having substantially similar dimensions, each characteristic of the code being represented by a respective unit (6) having a particular arrangement of shaded and blank regions; means cooperating with the sheet for defining four discrete sensed regions of the plane of the sheet which are smaller (9) than the said square regions (1, 2, 3, 4) and which are capable of registering in one-to-one correspondence with respective square regions with correct relative positioning of the code, characterized in that the sheet is pre-printed from a negative printing plate and in that the sheet includes a plurality of such units (6) each marked with a character, equivalent to the respective one of said characteristics represented by shading in that unit (6), the characters being provided in specific portions (20, Fig. 7) of the sheet around the units (6) and adjacent their edges and in which the means for defining the discrete sensed regions comprises a masking sheet with four discrete regions (9) for defining the sensed regions whereby the masking sheet is interposed between the shaded code sheet and a sensor sheet.

5. A method of coding and reading a sheet in accordance with Claim 4, in which the sheet is encoded with marks representing characteristics as shaded units (6) and additionally as corresponding characters at the specific portions (20, Fig. 7), and in which the sheet is read using a sensor to sense light from four discrete sensed regions of the plane of each code which are smaller (9) than the said square regions (1, 2, 3, 4) and which are placed in register in one-to-one correspondence with respective square regions, including positioning the code for accurate sensing of the code such that none of the sensed regions (9) comes into register with any part of any of the square regions (e.g. 2, 3, 4) adjacent to its unique square region (1) and in which the sheet is proof-read.

## Patentansprüche

1. Hell-Dunkel-Code-System mit einem Bogen, der nach einem festgelegten Hell-Dunkel-Code markiert ist, welcher eine Vielzahl von kennzeichnenden Elementen hat und wenigstens eine Einheit (6) aufweist, wobei jede Einheit (6) in vier rechteckige Abschnitte (1, 2, 3, 4) mit im wesentlichen gleichartigen Abmessungen unterteilt ist, wobei jedes kennzeichnende Element des Codes durch eine entsprechende Einheit (6) mit einer bestimmten Anordnung von dunklen und hellen Abschnitten dargestellt wird; und mit einem Mittel, das mit dem markierten Bogen zusammenwirkt, um vier diskrete, abgetastete Abschnitte (9) in der Ebene des Bogens zu definieren, die kleiner als die rechteckigen Abschnitte (1, 2, 3, 4) sind und die in Einszu-Eins-Übereinstimmung mit den entsprechenden rechteckigen Abschnitten bei korrekter relativer Positionierung des Codes ausgerichtet werden können, gekennzeichnet dadurch, daß der Bogen ein manuell markierter Bogen ist, der die in die rechteckigen Abschnitte (1, 2, 3, 4) unterteilte Einheit (6) zeigt, und daß das Mittel zur Definition der diskreten, abgetasteten Abschnitte einen Abdeckbogen mit vier diskreten Abschnitten (9) zur Definition der abgetasteten Abschnitte aufweist, wobei der Abdeckbogen zwischen den Hell-Dunkel-Code-Bogen und einen Sensor-Bogen eingefügt wird.

2. Hell-Dunkel-Code-System nach Anspruch 1, gekennzeichnet dadurch, daß die Vielzahl von kennzeichnenden Elementen eine Dezimalannotation von 0 bis 9 aufweist.

3. Verfahren zum Codieren und Lesen eines Hell-Dunkel-Codes unter Verwendung des markierten Bogens des Systems nach Anspruch 1 oder 2, das die manuelle Markierung des vorgedruckten Markierungsbogens zur Darstellung der kennzeichnenden Elemente als Hell-Dunkel-Einheiten (6) und dann die Verwendung eines Sensor-Bogens aufweist, um Licht von vier diskreten, abgetasteten Bereichen (9) in der Ebene jedes Codes zu erfassen, die kleiner als die rechteckigen Abschnitte (1, 2, 3, 4) sind und die in Eins-zu-Eins-Übereinstimmung mit den entsprechenden rechteckigen Abschnitten ausgerichtet sind, einschließlich der Positionierung des Codes zum genauen Abtasten des Codes, so daß keiner der abgetasteten Abschnitte (9) in Ausrichtung oder Überdeckung mit irgendeinem Teil eines der rechteckigen Abschnitte (z. B. 2, 3, 4), die an den eindeutigen rechteckigen Abschnitt (1) angrenzen, kommt.

4. Gedruckter Informationsbogen, der nach einem festgelegten Hell-Dunkel-Code mit einer Vielzahl von kennzeichnenden Elementen markiert ist, welcher wenigstens eine Einheit (6) aufweist, wobei jede Einheit (6) in vier rechteckige Abschnitte (1, 2, 3, 4) mit im wesentlichen gleichartigen Abmessungen unterteilt ist, bei dem jedes kennzeichnende Element des Codes durch eine entsprechende Einheit (6) mit einer bestimmten Anordnung von dunklen und hellen Abschnitten dargestellt wird; ein Mittel, das mit dem Bogen zusammenwirkt, um vier diskrete, abgetastete Abschnitte (9) in der Ebene des Bogens zu definieren, die kleiner als die rechteckigen Abschnitte (1, 2, 3, 4) sind und die in Eins-zu-Eins-Übereinstimmung mit den entsprechenden rechteckigen Abschnitten bei korrekter relativer Positionierung des Codes ausgerichtet werden können, gekennzeichnet dadurch, daß der Bogen von einer negativen Druckplatte vorgedruckt wird und daß der Bogen eine Vielzahl dieser Einheiten (6) einschließt, die jeweils mit einem kennzeichnenden Element markiert sind, das gleich dem entsprechenden der kennzeichnenden Elemente ist, die durch das Hell-Dunkel-System in dieser Einheit (6) dargestellt werden, wobei die kennzeichnenden Elemente in bestimmten Teilen (20, Fig. 7) des Bogens um die Einheiten (6) herum und angrenzend an deren Kanten angeordnet sind, und dadurch, daß das Mittel zur Definition der diskreten, abgetasteten Abschnitte einen Abdeckbogen mit vier diskreten Abschnitten (9) zur Definition der abgetasteten Abschnitte aufweist, wobei der Abdeckbogen zwischen den Hell-Dunkel-Code-Bogen und einen Sensor-Bogen eingefügt wird.

5. Verfahren zum Codieren und Lesen eines Bogens nach Anspruch 4, bei welchem der Bogen mit Markierungen codiert wird, die kennzeichnende Elemente als Hell-Dunkel-Einheiten (6) und zusätzlich als entsprechende kennzeichnende Elemente an den bestimmten Teilen (20, Fig. 7) darstellen, und bei welchem der Bogen unter Verwendung eines Sensors gelesen wird, um das Licht von vier diskreten, abgetasteten Abschnitten (9) in der Ebene jedes Codes zu erfassen, welche kleiner als die rechteckigen Abschnitte (1, 2, 3, 4) sind und die in Eins-zu-Eins-Übereinstimmung mit den entsprechenden rechteckigen Abschnitten ausgerichtet sind, einschließlich der Positionierung des Codes zum genauen Abtasten des Codes, so daß keiner der abgetasteten Abschnitte (9) in Ausrichtung oder Überdeckung mit irgendeinem Teil eines der rechteckigen Abschnitte (z. B. 2, 3, 4), die an den eindeutigen rechteckigen Abschnitt (1) angrenzen, kommt, und bei welchem der Bogen korrekturgelesen wird.

## Revendications

1. Système de code ombré comprenant: une feuille marquée en correspondance avec un code d'ombrage prédéterminé possédant plusieurs caractéristiques, comprenant au moins une unité (6), chaque unité (6) étant subdivisée en quatre régions carrées (1, 2, 3, 4) ayant essentiellement les mêmes dimensions, chaque caractéristique du code étant représentée par une unité respective (6) comportant un arrangement particulier de régions ombrées et de régions vierges; ainsi qu'un moyen coopérant avec la feuille marquée pour définir quatre régions discrètes détectées du plan de la feuille, qui sont inférieures (9) auxdites régions carrées (1, 2, 3, 4) et qui sont capables de venir se mettre en correspondance mutuelle une par une avec les régions carrées respectives avec un positionnement relatif correct du code, caractérisé en ce que la feuille est une feuille marquée manuellement représentant l'unité (6) subdivisée en ses régions carrées (1, 2, 3, 4) et dans lequel le moyen pour définir les régions discrètes détectées comprend une feuille de masquage comprenant quatre régions discrètes (9) pour définir les régions détectées, par lequel la feuille de masquage est intercalée entre la feuille de code ombré et une feuille détectrice.

2. Système de code ombré selon la revendication 1, caractérisé en ce que lesdites plusieurs caractéristiques comprennent la notation décimale de 0 à 9.

3. Procédé de codage et de lecture d'un code ombré utilisant la feuille marquée du système selon la revendication 1 ou 2, comprenant le fait de marquer manuellement la feuille de marquage préimprimée pour représenter les caractéristiques sous forme d'unités ombrées (6) et d'utiliser ensuite une feuille détectrice pour détecter la lumière à partir de quatre régions discrètes détectées du plan de chaque code, qui sont inférieures (9) auxdites régions carrées (1, 2, 3, 4) et qui sont placées en correspondance mutuelle une à une avec les régions carrées respectives, y compris le fait de positionner le code pour permettre sa détection précise, de telle sorte qu'aucune des régions détectées (9) ne vient se mettre en correspondance avec aucune partie de n'importe quelle région carrée (par exemple 2, 3, 4) adjacente à sa région carrée unique (1).

4. Feuille d'information imprimée conformément à un code d'ombrage prédéterminé possédant plusieurs caractéristiques, comprenant au moins une unité (6), chaque unité (6) étant subdivisée en quatre régions carrées (1, 2, 3, 4) ayant essentiellement les mêmes dimensions, chaque caractéristique du code étant représentée par une unité respective (6) comportant un arrangement particulier de régions ombrées et de régions vierges; ainsi qu'un moyen coopérant avec la feuille pour définir quatre régions discrètes détectées du plan de la feuille, qui sont inférieures (9) auxdites régions carrées (1, 2, 3, 4) et qui sont capables de venir se mettre en correspondance mutuelle une par une avec les régions carrées respectives avec un positionnement relatif correct du code, caractérisé en ce que la feuille est pré-imprimée à partir d'une plaque d'impression négative, et en ce que la feuille englobe plusieurs unités (6) de ce type chacune étant marquée à l'aide d'un caractère équivalent à celle desdites caractéristiques représentée par l'ombrage dans cette unité (6), les caractères étant prévus dans des portions spécifiques (20, figure 7) de la feuille autour des unités (6) et en position adjacente à leurs bords, et dans laquelle le moyen pour définir les régions discrètes détectées comprend une feuille de masquage munie de quatre régions discrètes (9) pour définir les régions détectées, par lequel la feuille de masquage est intercalée entre la feuille de code ombré et une feuille détectrice.

5. Procédé de codage et de lecture d'une feuille conformément à la revendication 4, dans lequel la feuille est encodée avec des repères représentant des caractéristiques sous forme d'unités ombrées (6) et, en outre, sous forme de caractères correspondants aux portions spécifiques (20, figure 7), et dans lequel la feuille est lue en utilisant un détecteur pour détecter de la lumière à partir de quatre régions discrètes détectées du plan de chaque code, qui sont inférieures (9) auxdites régions carrées (1, 2, 3, 4) et qui sont placées en correspondance mutuelle une à une avec les régions carrées respectives, y compris le fait de positionner le code pour permettre sa détection précise, de telle sorte qu'aucune des régions détectées (9) ne vient se mettre en correspondance avec aucune partie de n'importe quelle région carrée (par exemple 2, 3, 4) adjacente à sa région carrée unique (1) et dans lequel la feuille est révisée.
